# EUROPÄISCHE PATENTANMELDUNG

(11) **EP 1 967 253 A1**
(43) Veröffentlichungstag der Anmeldung: **10.09.2008**
(21) Anmeldenummer: 07004877.2
(22) Anmeldetag: 09.03.2007
(51) Int. Cl.: B01D 53/50, B01D 53/60

(54) **Waschturm**

(71) Anmelder: ENVIROSERV GMBH, 45136 Essen (DE)
(72) Erfinder: Dickamp, Markus, 44894 Bochum (DE); Feldkamp, Markus, 46244 Bottrop (DE); Moser, Christian, 45359 Essen (DE)
(74) Vertreter: Stenger, Watzke & Ring

(57) **Zusammenfassung**

Die vorliegende Erfindung betrifft einen Waschturm (12) für- eine . Rauchgasreinigungsanlage (10) mit einem Rauchgaseinlaß (14), einem Rauchgasauslaß (16), einem Reaktionsbereich (18) zur Reaktion eines den Reaktionsbereich (18) durchströmenden Rauchgases mit einem seewasserbasierten Agens sowie einem Sumpf (20).

Es hat sich als nachteilig erwiesen, daß aufwendige Einrichtungen zur Behandlung des Seewassers erforderlich sind, wobei es Aufgabe der Erfindung ist, hier eine Verbesserung zu bewirken.

Es wird vorgeschlagen, daß der Sumpf (20) eine Zuführeinheit (24) für frisches Seewasser aufweist, welches im Sumpf (20) das aus der Reaktion stammende Agens aufnimmt.

## Beschreibung

Die vorliegende Erfindung betrifft einen Waschturm für eine Rauchgasreinigungsanlage mit einem Rauchgaseinlaß, einem Rauchgasauslaß, einem Reaktionsbereich zur Reaktion eines den Reaktionsbereich durchströmenden Rauchgases mit einem seewasserbasierten Agens sowie einem Sumpf. Darüber hinaus betrifft die Erfindung ein Verfahren zum Betrieb des erfindungsgemäßen Waschturms.

Ein Waschturm der gattungsgemäßen Art wird zur Reinigung von Rauchgas eingesetzt, welches bei der Verbrennung von fossilen Brennstoffen und dergleichen anfällt. Ein derartiges Rauchgas enthält unbehandelt eine große Anzahl und Menge an Schadstoffen wie Stickoxide, Schwefeloxide, giftige Stäube und dergleichen. Die Emission solcher Stoffe unterliegt gesetzlichen Grenzwerten, die es erforderlich machen, das Rauchgas vor einer Freisetzung in die Atmosphäre so zu behandeln, daß die vorgeschriebenen Grenzwerte eingehalten werden. Erreicht wird dies im Stand der Technik dadurch, daß eine Rauchgasreinigungsanlage vorgesehen wird, in der das Rauchgas vor einer Freisetzung in die Atmosphäre behandelt wird. Derartige Rauchgasreinigungsanlagen werden insbesondere bei Kraftwerken, chemischen Anlagen und dergleichen eingesetzt. Ein wesentliches Teil der Rauchgasreinigungsanlage ist ein Waschturm, in den das Rauchgas in einem unteren Bereich eingeleitet wird. Dieses durchströmt den Waschturm nach oben und verläßt ihn durch eine im oberen Bereich angeordnete Auslaßöffnung. Zwischen den Öffnungen ist im Waschturm ein Reaktionsbereich vorgesehen, in dem mittels entsprechender Düsenanordnungen ein in der Regel flüssiges Agens eingesprüht wird, welches in Reaktion mit dem Abgas tritt. Dabei werden giftige Stoffe gelöst beziehungsweise neutralisiert und mit dem Agens mitgeführt. Dieses fällt entgegen der Strömungsrichtung des Rauchgases in einen unterhalb der Einführöffnung für das Rauchgas vorgesehenen Sumpf. Von hier wird das Agens teilweise wiederverwendet und teilweise einer Entsorgung zugeführt. Entsprechend dem zu entsorgenden Anteil des Agens wird ein frisches Agens hinzugefügt.

Bei dem vorbeschriebenen Reinigungsverfahren enthält das Agens vorzugsweise Stoffe wie Calciumoxid, Calciumhydroxid, Calciumcarbonat, Calciumhydrogencarbonat, Mischungen hiervon oder dergleichen. Diese reagieren insbesondere mit den sauren Bestandteilen, die aus dem Abgas in das Agens in Lösung eingetreten sind, um diese zu neutralisieren.

Darüber hinaus sind Waschtürme und Verfahren bekannt, bei denen als Agens im wesentlichen Seewasser oder auch ausschließlich Seewasser zum Einsatz kommt. Bekanntermaßen enthält Seewasser bereits signifikante Anteile an alkalischen beziehungsweise erdalkalischen Stoffen wie Hydrogencarbonate und dergleichen. Damit eignet sich Seewasser per se bereits als Agens zum Einsatz in der Rauchgasreinigung. Kommt Seewasser als Agens zum Einsatz, so ist es erforderlich, verbrauchtes Seewasser aus dem Sumpf des Waschturms zu entfernen und durch frisches Seewasser zu ersetzen. Bevor das verbrauchte Seewasser jedoch wieder freigesetzt werden kann, ist es erforderlich, dieses in einem separaten Neutralisierungsbecken derart zu behandeln, daß es bedenkenlos wieder freigesetzt werden kann. Neben der Behandlung mit Chemikalien kommt zusätzlich eine Mischung mit frischem Seewasser in Betracht, so daß optimale Bedingungen für die anschließende Weiterbehandlung, zum Beispiel Begasung, realisiert werden können.

An dem beschriebenen Stand der Technik erweist es sich als nachteilig, daß aufwendige Einrichtungen zur Behandlung des Seewassers erforderlich sind. Die vorliegende Erfindung hat es zur **Aufgabe** gemacht, hier eine Verbesserung zu bewirken.

Als **Lösung** wird mit der Erfindung vorgeschlagen, daß der Sumpf eine Zuführeinheit für frisches Seewasser aufweist. Die Erfindung erlaubt es somit, bereits innerhalb des Bereichs des Waschturms eine hinreichende Mischung des Agens mit frischem Seewasser zu erreichen, um für die Oxidation geeignete Bedingungen zu schaffen. Hierdurch kann der anlagentechnische Aufwand deutlich reduziert werden. Das den Reaktionsbereich verlassende Agens fällt in den Sumpf des Waschturms und vermischt sich an dieser Stelle unmittelbar mit frischem Seewasser. Durch geeignete Bestimmung der Mengen kann eine entsprechende Behandlung und ein Einhalten der Grenzwerte erreicht werden. Die Zuführeinheit kann beispielsweise durch einen Kanal gebildet sein, der in den Sumpf hinein mündet. Die Zuführeinheit kann ferner eine Fördereinheit für das frische Seewasser aufweisen. Vorzugsweise sind Schutz- und Filtereinrichtungen vorgesehen, so daß das Seewasser direkt einem geeigneten Gewässer entnommen werden kann. Die Fördermittel können beispielsweise durch Pumpen oder dergleichen gebildet sein. Zum Zuführen des Agens im Reaktionsbereich können entsprechende Leitungsvorrichtungen vorgesehen sein, die mit Öffnungen versehen sind, durch die das Agens in die entsprechend gewünschten Bereiche des Reaktionsbereichs eingelassen werden können.

Gemäß einer Weiterbildung der Erfindung wird vorgeschlagen, daß der Sumpf eine gemeinsame Abführungsöffnung für das Agens und das Seewasser aufweist. Dies erlaubt es, eine besonders einfache Ausgestaltung zu erreichen, indem der Waschturm beispielsweise direkt auf einen Seewasser durchströmten Kanal aufgesetzt wird. Separate Becken und dergleichen können eingespart werden.

Um die Durchmischung des frischen Seewassers mit dem verbrauchten Agens innerhalb des Bereichs des Sumpfes des Waschturms zu verbessern, wird vorgeschlagen, daß die Zuführeinheit mehrere Öffnungen aufweist. Auf diese Weise lassen sich für die Durchmischung vorteilhafte Strömungsmuster erreichen, so daß räumlich lokale Anhäufungen von Schadstoffen reduziert werden können.

Darüber hinaus wird vorgeschlagen, daß die Zuführeinheit ein Kanalsystem zur verteilten Zuleitung des frischen Seewassers aufweist. So kann das Seewasser über verschiedene Kanäle und/oder Leitungen dem Waschturmsumpf zugeführt werden. Dies erweist sich insbesondere dann als vorteilhaft, wenn einzelne Kanäle und/oder Leitungen aus Wartungsgründen außer Betrieb gesetzt werden müssen. Auf diese Weise kann ein permanenter Betrieb des Waschturms aufrechterhalten werden. Auch können einzelne Öffnungen der Zuführeinheit mit eigenen Kanälen zur Zuführung frischen Seewassers versehen sein. Dies erlaubt es, die Strömungsmenge des frischen Seewassers gemäß der Rauchgasleistung beziehungsweise des Schadstoffaustrags anzupassen.

In einer weiteren Airsgestaltung weist der Waschturm eine Mischeinheit auf. Die Mischeinheit kann beispielsweise durch aktive Mischelemente wie Propeller, bewegbare Flossen und dergleichen gebildet sein, sie kann darüber hinaus aber auch passive Elemente, beispielsweise in Form von Hindernissen oder dergleichen, aufweisen Natürlich kann die Mischeinheit auch durch die geometrische Anordnung von Öffnungen der Zuführeinheit gebildet sein. Auf diese Weise ist es möglich, die Mischeinheit und die Zuführeinheit einstückig auszubilden. Eine besonders einfache und kompakte Anordnung kann erreicht werden.

In einer Weiterbildung wird vorgeschlagen, daß die Öffnung eine Düse aufweist. Durch die Düse kann das frische Seewasser in vorgebbarer Art und Weise in den Sumpf eingeführt werden. Durch Form und Ausrichtung der Düse kann eine Durchmischung weiter verbessert werden. Die Düse kann beispielsweise als VenturiDüse oder dergleichen ausgebildet sein.

Gemäß einer weiteren vorteilhaften Ausgestaltung der Erfindung wird vorgeschlagen, daß im Bereich vor der Zuführeinheit Entnahme und Fördermittel zur Versorgung des Reaktionsbereichs mit Seewasser angeordnet sind. Das Agens in Form von Seewasser wird vor dem Waschturm entnommen und dem Reaktionsbereich zugeführt. Dies kann beispielsweise mittels entsprechender Rohrleitungen vorgesehen sein, die in einem Eindüsbereich im Reaktionsbereich des Waschturms münden. Das Seewasser kann aus einem Zuführkanal mittels bekannter Fördermittel wie Pumpen, Hebemittel und dergleichen entnommen werden. Auch kann das Seewasser gravitär durch den Sumpf (gegebenenfalls auch das anschließende Becken) geführt werden, zum Beispiel aus einem Vorlagebecken. Diese fördern das als Agens dienende frische Seewasser durch ein entsprechendes Leitungsmittel in den Reaktionsbereich. Auf diese Weise kann ein offener Kreislauf bezüglich des Seewassers und des Agens erreicht werden, wodurch Kosten und Aufwand eingespart werden können.

Gemäß einer weiteren Ausgestaltung kann der Waschturm ein Steuerelement aufweisen. Vorzugsweise ist das Steuerelement geeignet für die Menge des zugeführten frischen Seewassers. Auf diese Weise kann auf Leistungsschwankungen bezüglich der Rauchgasmenge sowie auch auf Schadstoffschwankungen eingegangen werden. Mittels des Steuerelements kann die erforderliche Menge an frischem Seewasser, welches dem Sumpf zugeführt werden soll, eingestellt werden. Das Steuerelement kann beispielsweise durch ein Ventil, eine bewegliche Drossel oder dergleichen gebildet sein.

Weiterhin wird vorgeschlagen, daß der Sumpf eine Oxidanszuführeinheit aufweist. Als Oxidans kommt beispielsweise ein Fluid, insbesondere ein Gas wie Luft, Sauerstoff oder dergleichen in Frage. Dieses wird über ein geeignetes Leitungsnetz in den Sumpf des Waschturms eingeleitet. Vorzugsweise dient das Oxidans dazu, eine unvollständige Oxidation von Schadstoffen durch das Agens zu vervollständigen. Es werden Schwefelverbindungen der Oxidationsstufe 4 (Bisulfite/Sulfite) in Schwefelverbindungen der Oxidationsstufe 6 (Bisulfate/Sulfate) oxidiert. Auf einfache Weise soll ein optimaler pH-Wert erreicht werden. Hierdurch kann eine Erleichterung der chemischen Behandlung zur Unschädlichmachung der Schadstoffe erreicht werden. Die Oxidanszuführeinheit kann hierzu beispielsweise ein im Sumpf angeordnetes Leitungssystem mit entsprechenden Austrittsöffnungen in geeigneter Größe aufweisen.

In einer vorteilhaften Weiterbildung wird vorgeschlagen, daß der Sumpf eine Katalysatoreinheit aufweisen kann. Mit der Katalysatoreinheit können chemisch unerwünschte Stoffe in Stoffe umgewandelt werden, die entweder ohne weitere Behandlung freigesetzt werden dürfen oder mittels einfacher weiterer chemischer Verfahren unschädlich gemacht werden können. Die Katalysatoreinheit kann beispielsweise in Form eines Gitters oder dergleichen im Bereich des Sumpfes angeordnet sein. Sie ist vorzugsweise an einem Boden des Sumpfes befestigt, so daß ihre Position ortsfest ist.

Mit der Erfindung wird ferner ein Verfahren zum Betrieb des erfindungsgemäßen Waschturms vorgeschlagen, wobei einem Reaktionsbereich des Waschturms ein Seewasser basierendes Agens zugeführt und in das Rauchgas eingetragen wird, das Agens nach Verlassen des Reaktionsbereichs einem Sumpf zugeführt wird, wobei der Sumpf von frischem Seewasser durchströmt wird. Die Erfindung erlaubt es somit, die Konzentration der aus dem Rauchgas ausgewaschenen Schadstoffe auf einen gewünschten Wert einzustellen. Insbesondere ist hierbei der pH-Wert zu nennen, der beim bestimmungsgemäßen Betrieb des Waschturms bei dem des Sumpfes zugeführten Agens etwa pH 3 betragen kann. Ein Stoff mit diesem pH-Wert bildet eine ätzende Säure und ist dementsprechend als gefährlich zu klassifizieren. Durch den direkten Eintrag des Agens in das den Sumpf durchströmende frische Seewasser, welches bekanntermaßen einen pH-Wert im Bereich von 7,5 bis 8,5 aufweist, kann erreicht werden, daß der pH-Wert der Mischung aus Agens und Seewasser beim Verlassen des Waschturms einen pH-Wert im Bereich von etwa 6 aufweist. Der pH-Wert nähert sich also dem neutralen pH-Wert von etwa 7 an. Hierdurch wird der saure Charakter des Agens erheblich entschärft und es werden bessere Oxidationsbedingungen erreicht.

Um eine gute Durchmischung des Agens mit dem frischen Seewasser im Sumpf des Waschturms erreichen zu können, wird vorgeschlagen, daß das frische Seewasser eingedüst wird. Vorzugsweise soll in möglichst vielen Bereichen des Sumpfes frisches Seewasser zugeführt werden, damit die Durchmischung verbessert werden kann.

Um die Mischung im Sumpf weiter zu verbessern, wird vorgeschlagen, daß im Sumpf eine turbulente Strömung erzeugt wird.

Beispielsweise sind mehrere Düsen vorgesehen, die das Seewasser in unterschiedliche Richtungen eindüsen, so daß eine möglichst turbulente Strömung erreicht wird. Diese führt zu einer guten Durchmischung des Agens mit dem frischen Seewasser. Natürlich können auch Hindernisse im Strömungsweg des Seewassers angeordnet sein. Diese können durch Wände, Steine, geeignet geformte Hinderniselemente oder dergleichen gebildet sein.

Vorzugsweise werden das frische Seewasser und das aus dem Reaktionsbereich ausgetretene Agens im Sumpf gemischt. Hierdurch kann vermieden werden, daß unerwünschte Schadstoffkonzentrationen und pH-Werte außerhalb des Sumpfes auftreten können.

Um auf Änderungen der Betriebswerte des Waschturms und auch der Schadstoffzusammensetzung im Rauchgas reagieren zu können, wird vorgeschlagen, daß das Zuführen des frischen Seewassers gesteuert wird. Auf diese Weise kann eine entsprechende Bereitstellung des frischen Seewassers an die Rauchgasmenge beziehungsweise die Schadstoffmenge angepaßt werden.

Gemäß einer weiteren vorteilhaften Weiterbildung des erfindungsgemäßen Verfahrens wird vorgeschlagen, daß der pH-Wert des behandelten Seewassers geregelt wird. Das behandelte Seewasser ist beispielsweise zur Rückführung in das Gewässer vorgesehen. Der pH-Wert des behandelten Seewassers soll gemäß einem Vorschlag pH 6 nicht unterschreiten. Die Regelung kann beispielsweise die Förderleistung für das dem Reaktionsbereich zuzuführende Agens sowie auch die Strömungsmenge für das dem Sumpf zuzuführende frische Seewasser regeln. Die Effizienz des Verfahrens kann verbessert werden.

Gemäß einer Weiterbildung wird vorgeschlagen, daß als Agens frisches Seewasser verwendet wird. In dieser Ausgestaltung ist in dem Agens kein weiterer Stoff enthalten. Diese Ausgestaltung eignet sich insbesondere zur Verwendung in einem offenen System, bei dem frisches Seewasser einem entsprechend geeigneten Gewässer entnommen und nach Durchführung des Reinigungsverfahrens dem Gewässer wieder zugeführt wird. Eine besonders einfache und kostengünstige Ausgestaltung des Verfahrens kann erreicht werden Diese Ausgestaltung eignet sich insbesondere für Anlagen in Bereichen, in denen nur gering qualifiziertes Wartungspersonal oder nur begrenzte finanzielle Möglichkeiten zur Verfügung stehen.

Weitere Vorteile und Merkmale sind dem folgenden Ausführungsbeispiel zu entnehmen. Das Ausführungsbeispiel wird anhand von Schemazeichnungen erläutert und dient ausschließlich der Erläuterung der Erfindung, ohne diese zu beschränken.

Es zeigen:
- Fig.1:: eine Abgasreinigungsanlage für einen Verbrennungsofen zur Verbrennung von Steinkohle gemäß dem Stand der Technik und
- Fig. 2:: eine perspektivische Ansicht einer Anordnung mit einem Waschturm gemäß der Erfindung.

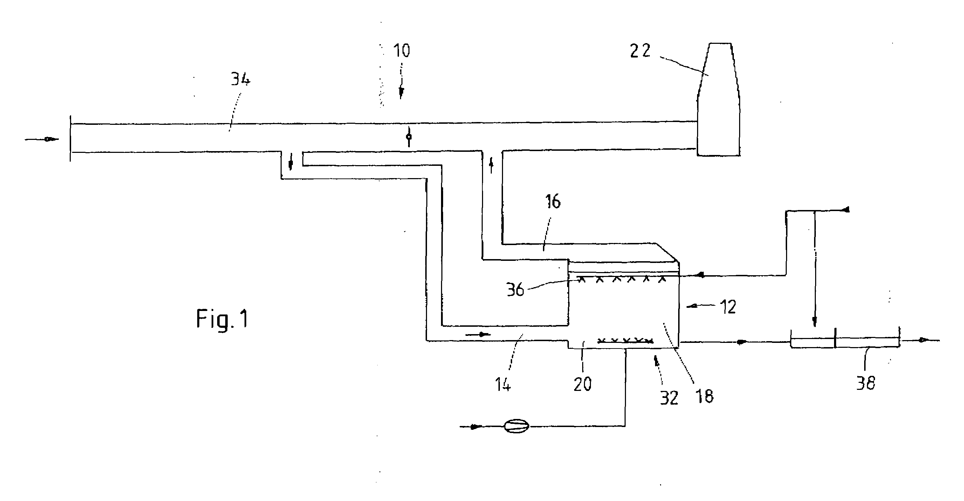

In Fig. 1 ist schematisch ein gattungsgemäßer Aufbau für eine Rauchgasreinigung dargestellt, wobei ein Kanal 34 ein Rauchgas von einem nicht näher dargestellten Verbrennungsofen abführt. Der Kanal 34 mündet in einen Rauchgaseinlaß 14 eines Waschturms 12. Der Rauchgaseinlaß 14 ist im unteren Bereich des Waschturms 12 angeordnet. Im oberen Bereich des Waschturms 12 ist ein Rauchgasauslaß angeordnet, der in strömungstechnischer Verbindung mit einem Kamin 12 steht, über den das gereinigte Rauchgas in die Atmosphäre abgegeben wird

Der Waschturm 12 weist zwischen seinem Rauchgaseinlaß 14 und seinem Rauchgasauslaß 16 einen Reaktionsbereich 18 auf, in dessen oberen Bereich eine Eindüseinrichtung 36 angeordnet ist, mittels der Seewasser als Agens in das den Waschturm 12 von unten nach oben durchströmende Rauchgas eingedüst wird. Das eingedüste Seewasser sammelt sich in einem unterhalb des Rauchgaseinlasses 14 angeordneten Sumpf 20 im Waschturm 12. Im Sumpf 20 ist ferner eine Oxidanszuführeinheit 32 angeordnet, mittels der Luft in fein verteilter Form in das sich im Sumpf 20 ansammelnde Seewasser eingeblasen wird.

Über eine nicht näher dargestellte Einrichtung wird frisches Seewasser der Eindüseinrichtung 36 zugeführt. Der Sumpf 20 ist ferner in strömungstechnischer Verbindung mit einem Neutralisierungsbecken 38, welchem neben dem verbrauchten Seewasser aus dem Sumpf 20 frisches Seewasser zugeführt wird. Das Neutralisierungsbecken 38 ist mit einem nicht näher bezeichneten Seewasserrücklauf verbunden, über den das neutralisierte Seewasser wieder an das Gewässer abgegeben wird.

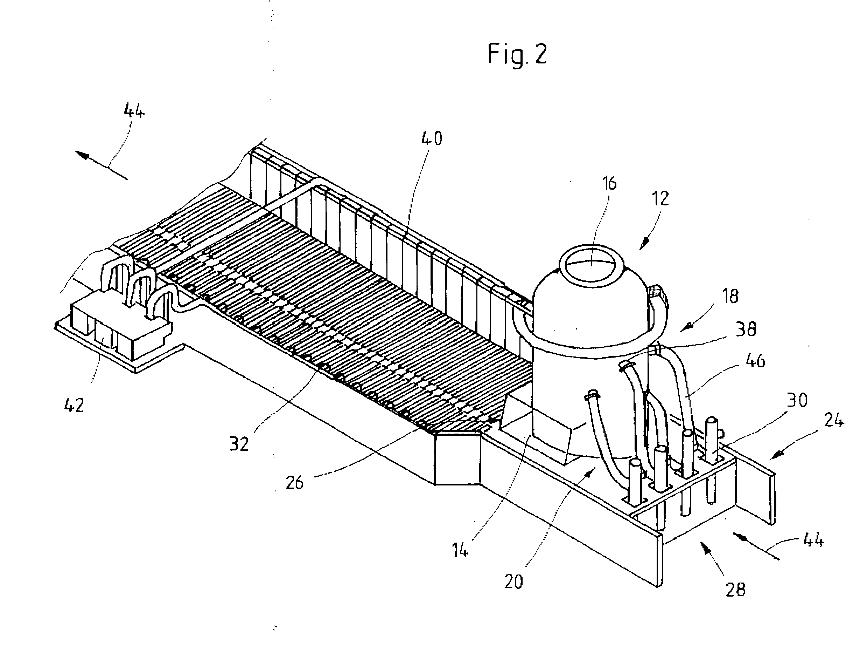

Fig. 2 zeigt ausschnittsweise eine Rauchgasreinigungsanlage mit einem Waschturm 12 gemäß der Erfindung. Eine kanalförmige Zuführeinheit 24 führt frisches Seewasser aus einem nicht näher bezeichneten Gewässer der Rauchgasreinigungsanlage 10 zu. Die Zuführeinheit 24 ist durch den unteren Bereich des Waschturms 12 unterhalb des Rauchgaseinlasses 14 durchgeführt und bildet den unterhalb des Rauchgaseinlasses 14 angeordneten Sumpf 20. Gegenüberliegend zur Zuführeinheit 24 ist eine Abführungsöffnung 26 für das mit Agens beaufschlagte Seewasser angeordnet. An diese schließt sich ein beckenförmig verbreiteter Kanal 40 an, der in einen nicht näher dargestellten Seewasserrücklauf mündet. Der Kanal 40 weist eine Oxidanszuführeinheit 32 auf, die im unteren Bereich des Kanals 40 angeordnet ist. Mittels einer Luftzuführeinrichtung 42 wird Luft in fein verteilter Form dem mit Agens beaufschlagten Seewasser zugeführt. Mit 44 ist die Strömung des Seewassers durch den Zuführkanal 24 und den Kanal 40-bezeichnet.

Der Waschturm 12 weist oberhalb des Rauchgaseinlasses 14 den Reaktionsbereich 18 auf, an den sich nach oben der Rauchgasauslaß 16 anschließt. Eine Eindüseinrichtung 38 ist im Reaktionsbereich 18 angeordnet und über Leitungen 46 mit Pumpen 30 strömugnstechnisch verbunden. Die Pumpen 30 fördern aus einem Bereich 28 strömungstechnisch vor der Zuführeinheit frisches Seewasser durch die Leitungen 46 zur Eindüseinrichtung 38. In der vorliegenden Ausgestaltung der Erfindung wird ausschließlich frisches Seewasser als Agens für die Rauchgasreinigung verwendet.

Das in den Reaktionsbereich 18 eingedüste Seewasser tritt in Wechselwirkung mit dem den Waschturm 12 durchströmenden Rauchgas, wobei Schadstoffe aus dem Rauchgas entnommen werden. Diese reichern sich in dem ausgedüsten Seewasser an, welches in den Sumpf absinkt. Das den Sumpf 20 erreichende Agens, hier das ausgedüste Seewasser, vermischt sich mit dem den Sumpf 20 durchströmenden frischen Seewasser und gelangt in den Kanal 40. Hier wird mittels der Oxidanszuführeinheit 32 Luft in fein verteilter Form dem mit Agens beaufschlagten Seewasser zugeführt.

Mittels eines nicht näher bezeichneten Steuerventils kann der Volumenstrom des Seewassers gesteuert werden. Dazu ist eine nicht näher bezeichnete pH-Wertistwerterfassung im Kanal 40 angeordnet, mit der der pH-Wert gemessen werden kann. Dieser wird mit einem pH-Sollwert verglichen. Da der pH-Wert des den Reaktionsbereich 18 verlassenden Agens etwa bei 3 liegt, erfolgt durch die Vermischung mit frischem Seewasser im Sumpf 20 ein Anstieg des pH-Werts. Der Anstieg ist davon abhängig, wie die Strömungsmenge des dem Sumpf 20 zugeführten frischen Seewassers in Bezug auf das Agens eingestellt wird. Bekanntermaßen liegt der pH-Wert von Seewasser in einem Bereich von etwa 7,5 bis 8,5. Mit der Regelung kann nunmehr durch Einstellen der Durchflußmenge erreicht werden, daß der pH-Wert im Bereich des Kanals 40 den Wert 6 erreicht. Mit diesem pH-Wert kann die Mischung aus Agens und frischem Seewasser aus dem Kanal 40 in den Seewasserrücklauf eingespeist werden.

Das in den Figuren dargestellte Ausführungsbeispiel dient lediglich der Erläuterung der Erfindung und ist für diese nicht beschränkend.

### Bezugszeichenliste

- 10: Rauchgasreinigungsanlage
- 12: Waschturm
- 14: Rauchgaseinlaß
- 16: Rauchgasauslaß
- 18: Reaktionsbereich
- 20: Sumpf
- 22: Kamin
- 24: Zuführeinheit
- 26: Abführungsöffnung
- 28: Bereich
- 30: Pumpe
- 32: Oxidanszuführeinheit
- 34: Kanal
- 36: Eindüseinrichtung
- 38: Neutralisierungsbecken

- 40: Kanal
- 42: Luftzuführeinrichtung
- 44: Strömungsrichtung
- 46: Leitung

## Patentansprüche

1. Waschturm (12) für eine Rauchgasreinigungsanlage (10) mit einem Rauchgaseinlaß (14), einem Rauchgasauslaß (16), einem Reaktionsbereich (18) zur Reaktion eines den Reaktionsbereich (18) durchströmenden Rauchgases mit einem seewasserbasierten Agens sowie einem Sumpf (20),
**dadurch gekennzeichnet,**
**daß** der Sumpf (20) eine Zuführeinheit (24) für frisches Seewasser aufweist, weiches im Sumpf (20) das aus der Reaktion stammende Agens aufnimmt.

2. Waschturm nach Anspruch 1, **dadurch gekennzeichnet, daß** der Sumpf (20) eine gemeinsame Abführungsöffnung (26) für das Agens und das Seewasser aufweist.

3. Waschturm nach Anspruch 1 oder 2, **dadurch gekennzeichnet, daß** die Zuführeinheit (24) mehrere Öffnungen aufweist.

4. Waschturm nach einem der Ansprüche 1 bis 3, **dadurch gekennzeichnet, daß** die Zuführeinheit (24) ein Kanalsystem zur verteilten Zuleitung des frischen Seewassers aufweist.

5. Waschturm nach einem der Ansprüche 1 bis 4, **gekennzeichnet durch** eine Mischeinheit.

6. Waschturm nach einem der Ansprüche 1 bis 5, **dadurch gekennzeichnet, daß** die Mischeinheit und die Zuführeinheit (24) einstückig ausgebildet sind.

7. Waschturm nach einem der Ansprüche 1 bis 6, **dadurch gekennzeichnet, daß** die Öffnung eine Düse aufweist.

8. Waschturm nach einem der Ansprüche 1 bis 7, **dadurch gekennzeichnet, daß** im Bereich (28) vor der Zuführeinheit (24) Entnahme- und/oder Fördermittel (30) zur Versorgung des Reaktionsbereichs (18) mit Seewasser angeordnet sind.

9. Waschturm nach einem der Ansprüche 1 bis 8, **gekennzeichnet durch** ein Steuerelement.

10. Waschturm nach einem der Ansprüche 1 bis 9, **dadurch gekennzeichnet, daß** der Sumpf (20) eine Oxidanszuführeinheit (32) aufweist.

11. Waschturm nach einem der Ansprüche 1 bis 10, **dadurch gekennzeichnet, daß** der Sumpf (20) eine Katalysatoreinheit aufweist.

12. Verfahren zum Betrieb eines Waschturms nach einem der Ansprüche 1 bis 11, wobei einem Reaktionsbereich (18) des Waschturms (12) ein seewasserbasierendes Agens zugeführt und in das Rauchgas eingetragen wird, das Agens nach Verlassen des Reaktionsbereichs (18) einem Sumpf (20) zugeführt wird,
**dadurch gekennzeichnet,**
**daß** der Sumpf (20) von frischem Seewasser durchströmt wird.

13. Verfahren nach Anspruch 12, **dadurch gekennzeichnet, daß** das frische Seewasser eingedüst wird.

14. Verfahren nach Anspruch 12 oder 13, **dadurch gekennzeichnet, daß** das frische Seewasser und das aus dem Reaktionsbereich (18) ausgetretene Agens im Sumpf (20) gemischt werden.

15. Verfahren nach einem der Ansprüche 12 bis 14, **dadurch gekennzeichnet, daß** im Sumpf (20) eine turbulente Strömung erzeugt wird.

16. Verfahren nach einem der Ansprüche 12 bis 15, **dadurch gekennzeichnet, daß** das Zuführen des frischen Seewassers gesteuert wird.

17. Verfahren nach einem der Ansprüche 12 bis 16, **dadurch gekennzeichnet, daß** ein pH-Wert des behandelten Seewassers geregelt wird.

18. Verfahren nach einem der Ansprüche 12 bis 17, **dadurch gekennzeichnet, daß** als Agens frisches Seewasser verwendet wird.
